# EUROPEAN PATENT SPECIFICATION

(11) **EP 2 463 405 B1**
(45) Date of publication and mention of the grant of the patent: **26.04.2017**
(21) Application number: 10806515.2
(22) Date of filing: 05.08.2010
(51) Int. Cl.: B23K 26/32, B23K 35/02, C23C 26/00, C23C 26/02, B23K 103/00

(54) **METHOD FOR CLOSING HOLE**
VERFAHREN ZUM SCHLIESSEN VON LÖCHERN
PROCÉDÉ POUR FERMER UN TROU

(30) Priority: 06.08.2009 JP 2009183599
(43) Date of publication of application: 13.06.2012
(73) Proprietor: IHI Corporation, Tokyo 135-8710 (JP)
(72) Inventor: FURUKAWA, Takashi, Tokyo 135-8710 (JP); SHIMODA, Yukihiro, Tokyo 135-8710 (JP); WATANABE, Mitsutoshi, Tokyo 135-8710 (JP); OCHIAI, Hiroyuki, Tokyo 135-8710 (JP)
(74) Representative: Lamb, Martin John Carstairs
(86) International application number: PCT/JP2010/063280
(87) International publication number: WO 2011/016516

(56) References cited:
- EP-A1- 1 659 196
- EP-A1- 2 039 802
- WO-A1-2004/111303
- JP-A- 2000 042 838
- JP-A- 2005 213 556
- JP-A- 2005 213 556
- JP-A- 2007 211 351

## Description

### TECHNICAL FIELD

The present invention relates to a method for causing a coating to grow by using electric discharge and thereby closing holes in a subject body with the coating.

### BACKGROUND ART

Various arts are proposed, in which electric discharge is used to grow coatings for the purpose of improving various properties such as abrasion resistance, corrosion resistance and such. Although these arts may produce satisfactory results in causing coatings to grow on flat surfaces, they may encounter difficulties when subject bodies have holes with considerable sizes. The reason is that, because electric discharge tends to come out as avoiding recesses such as holes, a resultant coating is unlikely to grow in or just above the hole and it is thus difficult to close the hole with the coating. Therefore it is frequently carried out to machine or fill a hole with some substances to obtain a subject surface without holes before growing a coating. Japanese Patent Application Laid-open No. 2005-211156 discloses a related art.

### DISCLOSURE OF INVENTION

If closing holes is enabled without particular pretreatments such as those described above, such an art is crucially favorable in view of improvement of productivity and improvement of reliability of a coating. Further, in special situations, it could be required to leave a hole just below a coating even with closing the hole with the coating. It is an object of the present invention to provide a method for closing a hole with a coating without any particular pretreatment.

JP2005213556A discloses closing a hole of an object by bringing the powder electrode of an electric spark machine and applying a voltage between the electrode and the object so as to generate a discharge that causes a produced coating to close the hole of the object.

JP2000042838A discloses using an electric spark machine to coat the inside of a hole.

The invention is in the method of claim 1.

### BRIEF DESCRIPTION OF DRAWINGS

[FIG. 1] FIG. 1 is a cross sectional view explaining a first embodiment of the present invention, wherein (a) depicts a step in which a first coating is grown, and (b) depicts a step in which a bevel is given to the coating.
[FIG. 2] FIG. 2 is a cross sectional view, in (a), depicting a step in which the coating is further made grown, and, in (b), depicting a step in which the coating is made grown to close a hole, which are carried out subsequent to the steps shown in FIG. 1.
[FIG. 3] FIG. 3 is a cross sectional view, in (a), depicting a step in which the coating is further made grown, and, in (b), depicting a step in which its surface is ground, which are carried out subsequent to the steps shown in FIG. 2.
[FIG. 4] FIG. 4 is a cross sectional view explaining a modified example of the first embodiment.
[FIG. 5] FIG. 5 is a cross sectional view explaining a second modified example of the first embodiment.
[FIG. 6] FIG. 6 is a cross sectional view explaining a second embodiment of the present invention.
[FIG. 7] FIG. 7 is (a) a plan sectional view, (b) an elevational sectional view, and (c) an elevational cross sectional view after forming a coating, which explains a third embodiment of the present invention.
[FIG. 8] FIG. 8 is (a) a plan sectional view, and (b) an elevational sectional view, which explains a sixth embodiment of the present invention.
[FIG. 9] FIG. 9 is a schematic elevational view of an electric spark machine used in the respective embodiments of the present invention.
[FIG. 10] FIG. 10 is a sectional view showing a machine component to which the present invention is applied in order to close a hole thereof.
[FIG. 11] FIG. 11 is a plan view of the machine component of FIG. 10.

### BEST MODE FOR CARRYING OUT THE INVENTION

Certain embodiments will be described hereinafter with reference to the appended drawings.

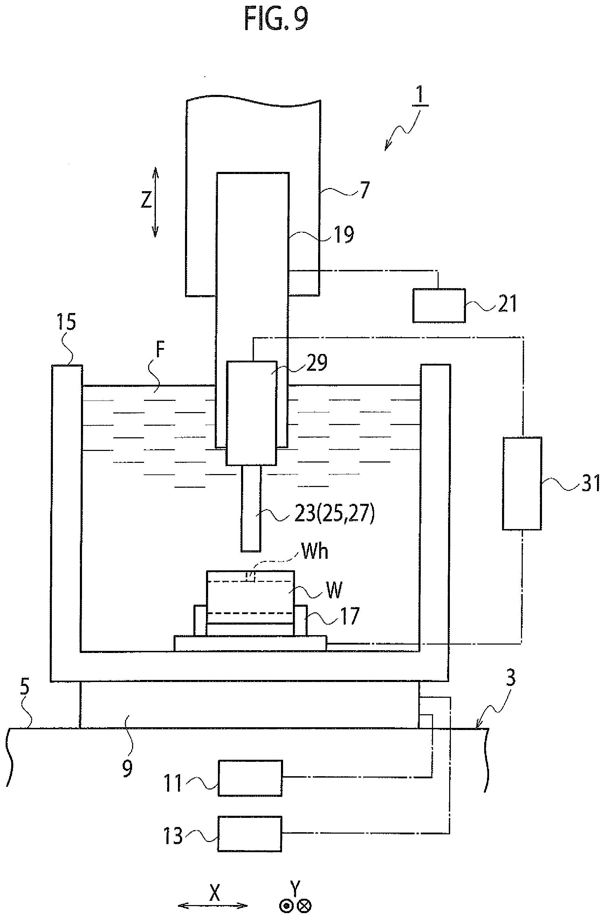

In the respective embodiments of the present invention, an electric spark machine is used to produce coating growth. As the electric spark machine, a known machine as shown in FIG. 9 is applicable.

An electric spark machine 1 is comprised of a bed 5 fixedly laid on a platform 3, a table 9 horizontally movably provided on the bed 5, a support 17 capable of moving integrally with the table 9, and a processing bath 15 retaining processing liquid (or processing gas) F. A workpiece W is attached to the support 17 in the processing bath 15. The electric spark machine 1 is further comprised of a column 7 as being opposed to the bed 5, and a head 19 vertically movably attached to a lowermost end of the column 7. The head 19 has a holder 29 capable of detachably supporting an electrode 23 (or 25, 27) at its lowermost end. The electric spark machine 1 is further comprised of a power source 31, thereby being capable of applying a voltage between the table 9 and the electrode 23. To the table 9 connected are an X-axis servo motor 11 and a Y-axis servo motor 13 so as to drive it, thereby being capable of controllably driving the table 9 in directions of an X-axis and a Y-axis (namely, in horizontal directions). Further to the head 19 connected is a Z-axis servo motor 21 so as to drive it, thereby being capable of controllably driving the head in a Z-axis direction, namely in a vertical direction.

While a non-exhaustible electrode is used in ordinary electric spark machining, the electrode 23 in the respective embodiments of the present invention is exhaustible. An exhaustible electrode is an electrode having a nature by which the electrode is preferentially, as compared with a workpiece, exhausted in electric discharge, and an electrode made of a molded body formed by compressing powder by pressing to have a relatively sparse structure, thereby allowing being exhausted is applicable thereto for example. Alternatively, instead of such a molded body, an electrode being processed with heat treatment after being compressed so as to be at least partially sintered, or formed by slurry pouring, MIM (Metal Injection Molding), spraying or such, may be used as an exhaustible electrode.

As a material applied to the electrode, powder of an electrically conductive substance such as any metal or alloy is applicable and can be properly selected depending on properties required for the coating. Further, one or more ceramics such as cBN, TiC, TiN, TiAlN, TiB₂, WC, SiC, Si₃N₄, Cr₃C₂, Al₂O₃, ZrO₂-Y, ZrC, VC, and B₄C may be included in the powder. Alternatively, any other electrically non-conductive substance may be included therein. In a case where the processing liquid F is any organic substance such as a mineral oil, any material unlikely to generate any carbides is preferably applied. Alternatively, it is possible to intentionally generate carbides so as to form a coating of carbide ceramics. In a case where an electrically conductive substance and an electrically non-conductive substance are mixed, empirically, coating growth is made easier where a ratio of the electrically conductive substance is 60% or higher, but it is not limiting.

To the power source 31 applicable is a known power source adapted to electric spark machining, which uses a plurality of switching devices connected in parallel to have capacities of outputting an intermittent pulse voltage and dynamically controlling its current value.

In ordinary electric spark machining, electric discharge is generated between a non-exhaustible electrode and a workpiece and the electric discharge causes a surface of the workpiece to gradually wear down so that machining of the workpiece is carried out. In the respective embodiments of the present invention, instead of machining of a workpiece, electric discharge causes the exhaustible electrode 23 to deposit a material of the electrode 23, or a reaction product between the material of the electrode 23 and the processing liquid (or the processing gas) F, on the workpiece as a coating.

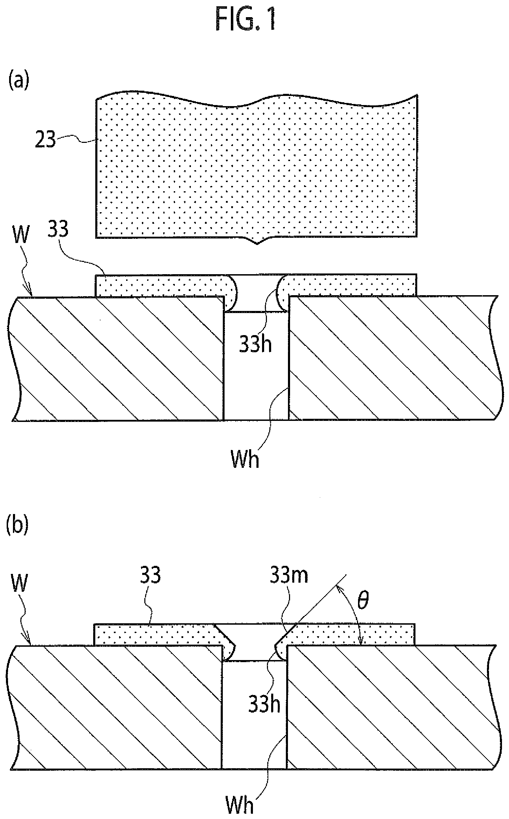

Referring to FIGs. 1 through 5 in addition to FIG. 9, a first embodiment of the present invention will be described hereinafter.

A subject body W to which a coating is given is a machine component or such, and requires being made of a material having electrical conductivity such as any metal. Alternatively, it may be possible to carry out flash plating of a metal on its surface in order to give electrical conductivity. The subject body W has a hole Wh as an object for being closed. The hole Wh is typically circular but may instead formed in any other shape.

The subject body W is attached to the support 17, as a workpiece of the electric spark machine, and is sunk into the processing liquid F of a mineral oil. Instead of the mineral oil, any electrically non-conductive proper liquid or a gas is applicable. The electrode 23 formed of powder including an electrically conductive substance as described above is attached to the holder 29, and is, by proper operation of the servo motors 11 and 13, brought close to the subject body W so as to lap over the hole Wh.

Next a voltage is applied from the power source 31 so as to generate electric discharge between the electrode 23 and the subject body W. As the voltage is pulsed as described above, the electric discharge is also pulsed and thus intermittent. The voltage may be several tens through several hundreds V but is properly determined according to a distance between the electrode 23 and the subject body W, mutually facing areas, a dielectric strength and such. It is possible to carry out dynamic control in which the voltage is temporarily boosted up at a step of initiating electric discharge and is thereafter lowered at a step of maintaining the electric discharge for example. An input electric power should be properly determined in accordance with a required degree of fusing the coating or a tolerable degree of thermal influence on the subject body W, but may be on a level of several tens through several hundreds W in a steady state.

The electric discharge causes a surface of the electrode 23 to wear down and the material of the electrode 23 to deposit on the subject body W, thereby forming a coating 33. In this process, between the coating 33 and the subject body W, and/or among particles in the coating 33, diffusion and welding are brought about by part of energy of the electric discharge, thereby enhancing adhesion of the coating. As shown in FIG. 1 (a), the coating 33 is formed on a limited spot on the subject body W facing to the electrode 23. The coating is not formed in the interior of the hole Wh but does no more than forming a part 33h slightly inwardly hanging over the interior from the periphery of the hole Wh. While the electrode 23, as being exhausted, recedes upward as shown in the drawing but, on a spot thereof just above the hole Wh, smaller exhaustion takes place, because electric discharge is unlikely to be generated there, and thus a resultant projection will be formed.

Referring to FIG. 1(b), machining is carried out with respect to the part 33h on the coating 33 so as to give a bevel 33m to the coating 33 along the hole Wh. This machining may be carried out by electric spark machining in which a non-exhaustive electrode is used instead of the electrode 23. An angle θ of the bevel 33m is preferably from 20 degrees to 70 degrees in view of obtaining effects described below.

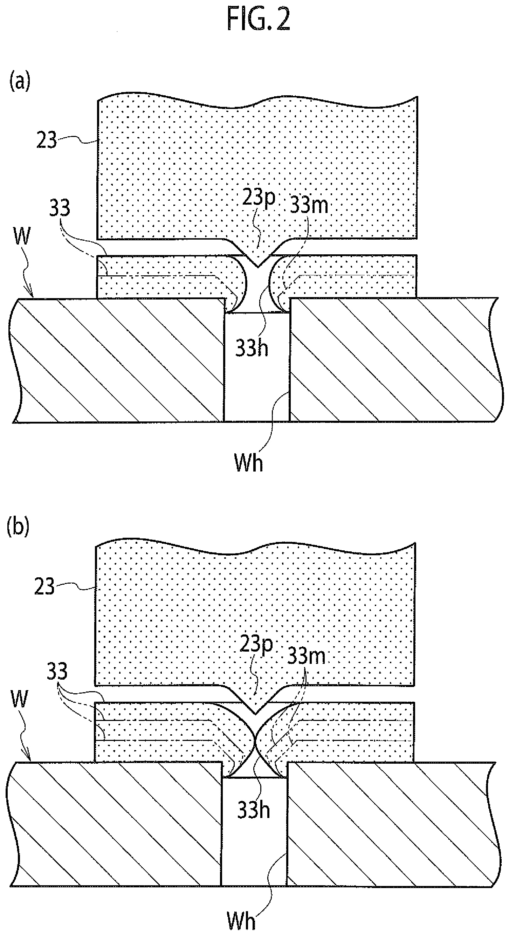

After machining, the electrode 23 is again brought close to the subject body W so as to lap over the hole Wh. As the foremost end of the electrode 23 recedes as described above, the electrode 23 is further properly brought close to the subject body W so as to compensate the receding distance. Thus the projection of the electrode 23 slightly gets into the hole 33h of the coating and thus faces the bevel 33m. In this condition, a voltage is applied from the power source 31 to generate electric discharge and thereby causes the coating 33 to grow. Then, as shown in FIG. 2(a), the coating 33 grows not only upward from its upper surface but also obliquely from the bevel 33m and perpendicularly to the surface thereof because the projection of the electrode 23 faces the surface of the bevel 33m. Therefore the coating grows inward relative to the hole. Because the electrode comes to have a further grown-up projection 23p, which grows to maintain a relation in which the projection 23p faces the surface of the growing bevel 33m, the coating 33 grows further inward relative to the hole.

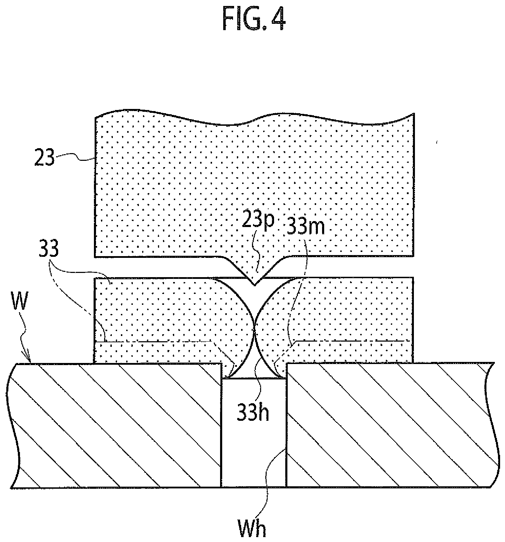

Electric discharge is properly interrupted in the course of the growth of the coating 33 and then machining to give a bevel 33m is again carried out. Electric discharge and machining are alternately repeated. Alternatively, as shown in FIG. 4 (a first modified example), these steps may be repeated without interrupting electric discharge. During this process, the electrode 23 is properly made to descend so as to compensate the distance of receding because the lowermost end of electrode 23 recedes as growth of the coating 33.

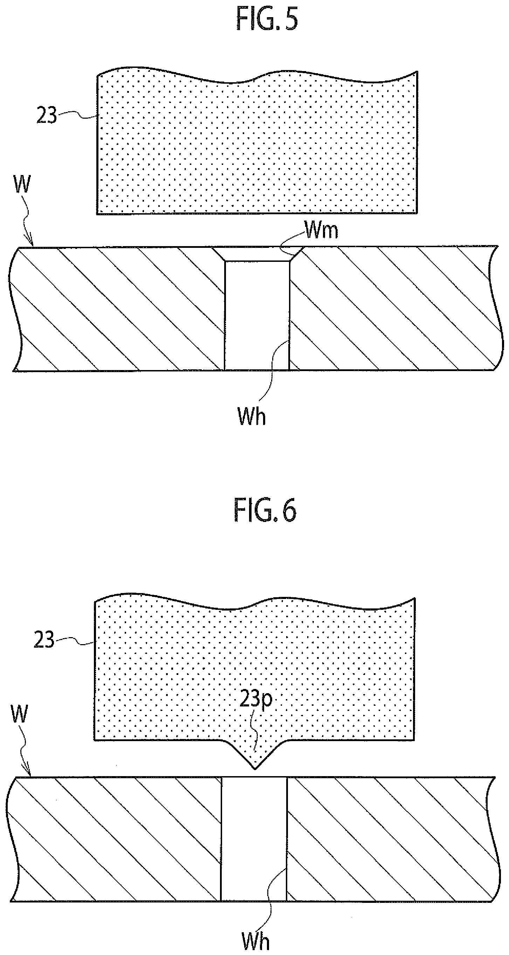

Further alternatively, before applying a voltage from the power source 31, a bevel Wm is given in advance by machining the subject body W as shown in FIG. 5 (a second modified example). At an initial stage of the step of generating electric discharge, the coating 33 is unlikely to come out on the hole Wh and the bevel Wm. As the electrode 23 is exhausted to some extent and then the projection 23p comes out, the projection 23p faces and comes close to the bevel Wm. Thus the coating 33 can grow obliquely from the bevel 33m and perpendicularly to the surface thereof. Also in this case, it may be carried out to interrupt electric discharge in the course of the coating growth and machine the coating to give the bevel 33m. Further electric discharge and machining may be alternately repeated.

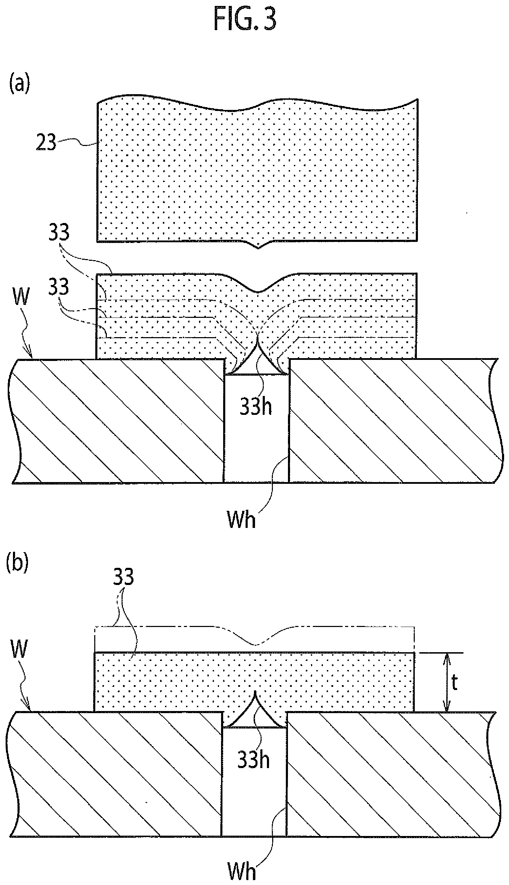

As the aforementioned steps progress, the coating 33 at last closes the hole Wh as shown in FIG. 2 (b) . Further when the coating is properly made to grow and it is judged that the hole Wh is sufficiently closed as shown in FIG. 3(a), growth of the coating 33 is made finished. The subject body W is taken out of the electric spark machine 1 and finishing as shown in FIG. 3 (b) is carried out if required, thereby obtaining the coating 33 with a target thickness t.

According to the aforementioned method, by exploiting a coating grown by electric discharge, it is enabled to close a hole of a subject body without any special pretreatment. Because the electric discharge tends to come out around spots close to an electrode, the electric discharge is unlikely to come out around recesses such as holes, therefore a coating is unlikely to grow in or just above the hole. To machine a coating to give a bevel thereto along the hole in accordance with the aforementioned method necessarily brings the spots in question away from the electrode. Therefore it was reasonably expected that the hole would be more unlikely to be closed. Contrary to such an expectation, the inventors have succeeded in growing a coating to close a hole by giving a bevel. More specifically, the aforementioned method has been reached contrary to general knowledge in the art field. Although the reason why such effects are produced has not been sufficiently figured out, the present inventors infer that the bevel acts to properly maintain a projection out of the electrode, which promotes deposition of a coating on surfaces of the bevel.

Instead of a step of machining to give a bevel, or in combination with the step, a second embodiment shown in FIG. 6 is possibly carried out. In the first embodiment as described above, the projection 23p is maintained by facing the electrode 23 to the surface of the bevel. In contrast in this embodiment, the electrode 23 is in advance comprised of a projection 23p capable of getting into a hole Wh. The projection 23p causes electrical discharge toward a periphery of the hole Wh and thus promotes growth of a coating which grows obliquely from the periphery toward the inside of the hole. Therefore, as with the first embodiment, the present method enables closing the hole Wh by means of the coating 33. Further as with the first embodiment, before applying a voltage, a bevel Wm is given to the hole Wh in advance by machining. Or, in any intermission of applying a voltage, machining the coating 33 along the periphery of the hole Wh may be carried out so as to give a bevel 33m to the coating 33. Further electric discharge and machining may be alternately repeated.

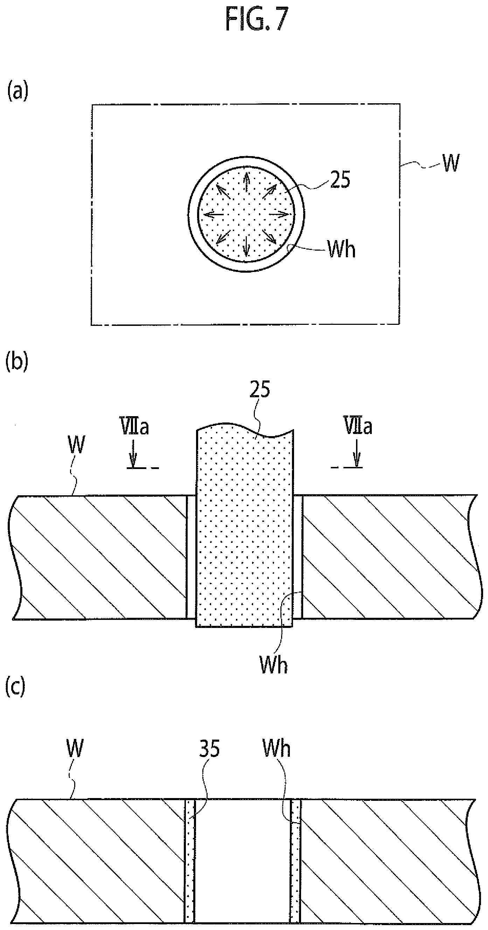

Instead of the aforementioned method, or in combination with it, a third embodiment shown in FIG. 7 is possibly carried out. An electrode 25 is formed in a slim elongated cylindrical shape, which allows insertion into the interior of the hole Wh. As will be understood from FIG. 7(a), (b), a narrow gap is left between the electrode 25 and the internal surface of the hole Wh. When the electrode 25 is inserted into the hole Wh and positioned at the center thereof and a voltage is applied from the power source 31, a coating 35 is uniformly grown on the internal surface of the hole Wh. As this step is repeated with changing electrodes, the hole Wh is closed by means of the growing coating. Alternatively, after shrinking the hole to some degree, any method selected from those described above may be carried out to close the hole. The hole Wh is not limited to that of a circular shape but may be rectangular or of any shape. In these cases, the electrode 25 is preferably formed in a shape adapted to the shape of the hole Wh. According to the method, it is enabled not only to close the hole Wh but also to fill its interior with the coating.

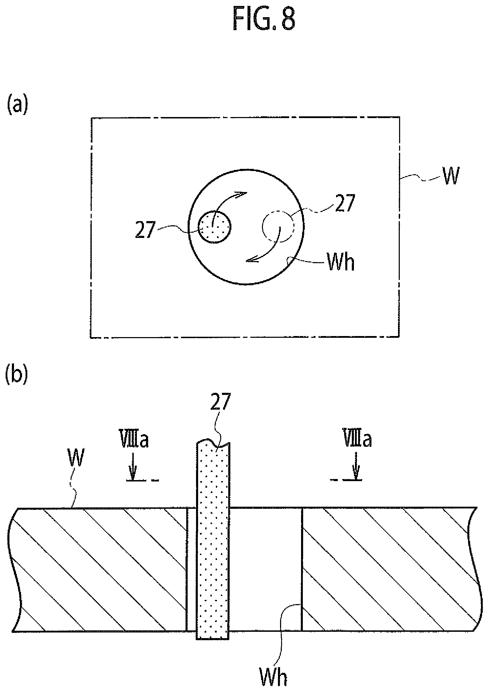

Instead of the third embodiment, or in combination therewith, a fourth embodiment shown in FIG. 8 may be possible. An electrode 27 has a diameter in a way smaller than the diameter of the hole Wh. The electrode 27 is inserted into the interior of the hole Wh and is offset from the center thereof in any direction. In this situation, servo motors 11 and 13 are cooperatively driven to rotate the electrode 27 around the center of the hole Wh. With keeping the electrode rotating, a voltage is applied from the power source 31 to generate electric discharge. Then a coating 35 is uniformly grown on the internal surface of the hole Wh. As this step is repeated with changing electrodes, the hole Wh is closed by means of the growing coating. Alternatively, after shrinking the hole to some degree, any method selected from those described above may be carried out to close the hole. The hole Wh is not limited to that of a circular shape but may be rectangular or of any other shape. In these cases, the electrode 25 is not moved in a rotating trajectory but moved in a trajectory adapted to the rectangular shape or the other shape.

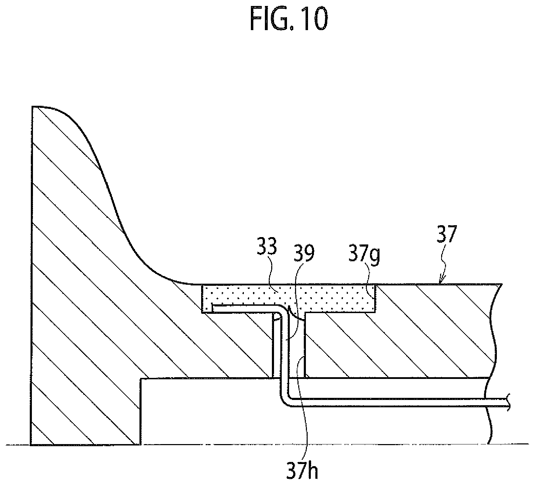

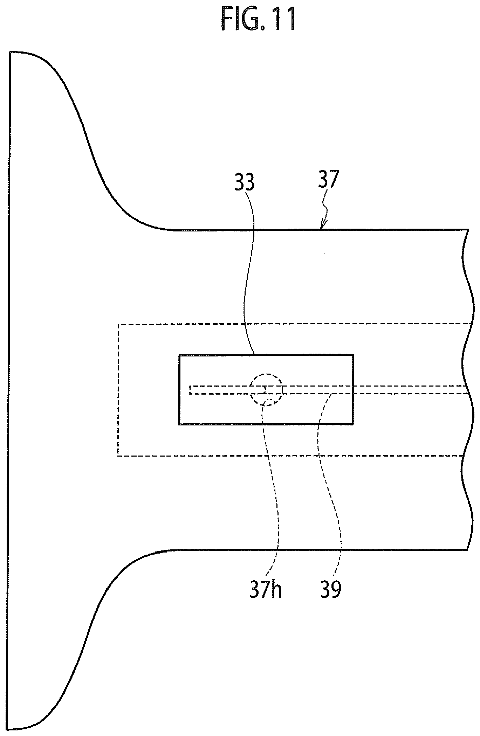

The methods in accordance with the aforementioned respective embodiments can be applied to closure of various holes in various machine components or any other substances. FIGs. 10 and 11 depict an example in which a hole of a poppet valve 37 for a reciprocating engine is closed. A stem of the valve 37 has a recess 37g bored in a rectangular shape and a hole 37h is opened on a bottom of the recess 37g to communicate with the interior of the stem. A thermocouple 39 is led out through the interior of the stem to the recess 37g. Any proper sensor may be applicable instead of the thermocouple. When any method among the aforementioned methods is applied in this situation, the recess 37g is filled with a coating 33 with an end of the thermocouple 39 embedded therein. Then the hole 37h is closed by the coating 33 whereas the hole 37h is as a whole not filled therewith but left to be a hollow. One can use the hole 37h left as a hollow to install any sensors in the hole 37h. While the thermocouple 39 is fixed to the stem, the hole 37h is closed. Thus the interior of the stem is not exposed to the atmosphere. More specifically, the thermocouple 39 fixed in the coating 33 can be utilized in use as means for measuring a surface temperature of the stem or such.

Although the invention has been described above by reference to certain embodiments of the invention, the invention is not limited to the embodiments described above. Modifications and variations of the embodiments described above will occur to those skilled in the art, in light of the above teachings.

### INDUSTRIAL APPLICABILITY

A method for closing a hole with a coating is provided.

## Claims

1. A method for closing a hole (Wh) of a subject body (W), comprising:
attaching the subject body (W) to an electric spark machine (1) as a workpiece;
bringing an electrode (23) of a powder including an electrically conductive metal or alloy close to the subject body (W) so as to lap the electrode (23) over the hole (Wh);
applying a voltage of several tens to several hundred Volts between the electrode (23) and the subject body (W) so as to generate electric discharge repeatedly to cause a coating (33) closing the hole (Wh) to grow from a periphery of the hole (Wh); and
machining an edge of the hole (Wh) before applying the voltage, or the coating (33) along the edge of the hole (Wh) during repetition of applying the voltage, to give a bevel (Wm, 33m).

2. The method of claim 1, further comprising:
alternately repeating the step of applying the voltage and the step of machining.

3. The method of claim 1, further comprising:
positioning the electrode (23) by inserting it inside the hole (Wh) so that a projection (23p) from the electrode is opposed to the inside of the hole (Wh) at the step of applying the voltage.

## Patentansprüche

1. Verfahren zum Schließen eines Lochs (Wh) in einem Subjektkörper (W), Folgendes beinhaltend:
Befestigung des Subjektkörpers (W) an einer elektrischen Funkenmaschine (1) als ein Werkstück;
Annäherung einer Elektrode (23) aus einem Puder, beinhaltend ein elektrisch leitfähiges Metall oder eine ebensolche Legierung, an den Subjektkörper (W) in einer solchen Weise, dass die Elektrode (23) das Loch (Wh) überlappt;
Anlegen einer Spannung von mehreren Zehn bis mehreren Hundert Volt zwischen der Elektrode (23) und dem Subjektkörper (W), um so eine wiederholte elektrische Entladung zu erzeugen, um eine Beschichtung (33), die das Loch (Wh) verschließt, zum Wachsen von einer Peripherie des Lochs (Wh) zu veranlassen; und
Bearbeitung einer Kante des Lochs (Wh) vor Spannungsanlegung, oder Auftrag der Beschichtung (33) entlang der Kante des Lochs (Wh) während des wiederholten Anlegens der Spannung, um eine Schräge (Wm, 33m) zu bilden.

2. Verfahren nach Anspruch 1, weiterhin beinhaltend:
alternierende Wiederholung des Schrittes der Spannungsanlegung und des Schrittes der Bearbeitung.

3. Verfahren nach Anspruch 1, weiterhin beinhaltend:
Positionierung der Elektrode (23) durch Einführen der Elektrode in das Loch (Wh), so dass eine Projektion (23p) von der Elektrode dem Innern des Lochs (Wh) beim Schritt der Spannungsanlegung gegenübersteht.

## Revendications

1. Procédé de fermeture d'un trou (Wh) d'un corps sujet (W), comprenant les étapes ci-dessous :
fixation du corps sujet (W) à une machine à étincelage électrique (1) en tant que pièce à travailler ;
amenée d'une électrode (23) d'une poudre incluant un métal conducteur d'électricité ou un alliage près du corps sujet (W) de sorte que l'électrode (23) chevauche le trou (Wh) ;
application d'une tension de plusieurs dizaines à plusieurs centaines de Volts entre l'électrode (23) et le corps sujet (W) de sorte à générer de manière répétée une décharge électrique afin d'entraîner la croissance d'un revêtement (33) fermant le trou (Wh) à partir d'une périphérie du trou (Wh) ; et
usinage d'un bord du trou (Wh) avant d'appliquer la tension, ou du revêtement (33) le long du bord du trou (Wh) au cours de la répétition de l'application de la tension, pour former un chanfrein (Wm, 33m).

2. Procédé selon la revendication 1, comprenant en outre l'étape ci-dessous :
répétition alternée de l'étape d'application de la tension et de l'étape d'usinage

3. Procédé selon la revendication 1, comprenant en outre l'étape ci-dessous :
positionnement de l'électrode (23) en l'insérant à l'intérieur du trou (Wh), de sorte qu'une saillie (23p) de l'électrode est opposée à l'intérieur du trou (Wh) lors de l'étape d'application de la tension.
